**Europäisches Patentamt**

**European Patent Office**

**Office européen des brevets**

(19)

(11) Numéro de publication: **0 277 852 B1**

# FASCICULE DE BREVET EUROPEEN

(45) Date de publication du fascicule du brevet:
08.08.90

(21) Numéro de dépôt: 88400061.3

(22) Date de dépôt: **13.01.88**

(51) Int. Cl.⁵: **F04B 39/02**, F04B 39/04, F16N 7/12

(54) **Dispositif de lubrification de piston.**

(30) Priorité: 16.01.87 FR 8700451

(43) Date de publication de la demande:
10.08.88 Bulletin 88/32

(45) Mention de la délivrance du brevet:
08.08.90 Bulletin 90/32

(84) Etats contractants désignés:
DE GB IT NL SE

(56) Documents cités:
DE-A- 1 900 862
GB-A- 264 182
US-A- 4 076 103

MACHINES ET METAUX, no. 353, janvier 1948, page 14;
R.R.: "Segments de piston en carbone"

(73) Titulaire: ABG SEMCA S.A., 408, avenue des Etats-Unis,
F-31016 Toulouse Cédex(FR)

(72) Inventeur: Cremont, Henri, THOMSON-CSF
SCPI 19, avenue de Messine, F-75008 Paris(FR)

(74) Mandataire: Grynwald, Albert et al, THOMSON-CSF
SCPI, F-92045 PARIS LA DEFENSE CEDEX 67(FR)

## Description

La présente invention concerne un dispositif de lubrification de piston, notamment de piston de compresseur, selon la première portie de la revendication 1.

Les compresseurs sont des appareils qui permettent de comprimer un fluide gazeux pour l'amener à une pression déterminée, variable selon l'usage qui doit être fait de ce fluide comprimé. C'est ainsi que lorsqu'un compresseur est utilisé dans des installations frigorifiques pour obtenir, par décompression, des températures très basses, la pression à atteindre peut être de plusieurs dizaines à quelques centaines de bars.

L'obtention de ces pressions très élevées implique une construction soignée des compresseurs : ces derniers consistent essentiellement en une chambre de compression cylindrique dans laquelle coulisse une piston animé d'un mouvement de va-et-vient par un système de bielle-vilebrequin actionné par un moteur. La chambre de compression comporte un clapet d'admission du fluide gazeux à basse pression et un clapet de refoulement à la pression requise.

Comme ces éléments - cylindre, piston, bielle et vilebrequin - sont liés entre eux et se déplacent les uns par rapport aux autres, les frottements sont importants et il est nécessaire de prévoir une lubrification. Cette lubrification est en général obtenue par une circulation naturelle ou plus ou moins forcée d'une huile contenue dans un carter englobant le vilebrequin : c'est le système dit à barbotage d'huile. Il faut éviter que l'huile de lubrification pénètre dans la chambre de compression et, à cet effet, il est prévu d'utiliser un ou plusieurs segments d'étanchéité portés par le piston et/ou le cylindre.

Ces segments d'étanchéité ont deux fonctions : l'une est d'éviter le passage de l'huile de lubrification dans la chambre de compression tout en permettant la lubrification du piston, et l'autre est d'obtenir une chambre de compression aussi étanche que possible de manière à réduire au maximum les fuites du fluide gazeux comprimé et atteindre ainsi la pression requise.

La demanderesse a décrit dans le FR-A 2 470 874 un compresseur dans lequel la lubrification n'est pas obtenue par un barbotage dans l'huile mais par des paliers auto-lubrifiants du type étanche, prégraissés ou à frottements secs tandis que le piston est agencé sans contact à l'intérieur du cylindre et comporte au moins un segment porteur et un segment d'étanchéité réalisés en un matériau à faible coefficient de frottement par rapport au cylindre. Un tel compresseur, dit compresseur sec, présente l'inconvénient d'avoir une durée de vie très limitée, de quelques dizaines d'heures environ.

Le but de la présente invention est donc de réaliser un dispositif de lubrification de piston, notamment pour piston de compresseur, qui ne présente pas les inconvénients précités du système à barbotage d'huile ou du système à frottements secs.

L'invention se rapporte donc à un dispositif de lubrification de piston, notamment pour un compresseur comportant un cylindre délimitant au moins une chambre de compression pourvue de moyens d'admission et de moyens de refoulement d'un fluide gazeux, au moins un piston mobile (et de préférence lisse) dans ce cylindre, et des moyens d'étanchéité permettant d'assurer l'étanchéité de la chambre de compression. Ce dispositif est caractérisé en ce que la lubrification du piston est obtenue par une mèche solidaire du corps de cylindre et conformée en anneau autour du piston, cette mèche, qui est installée entre des premiers et des seconds moyens d'étanchéité, le second moyen assurant l'étanchéité entre la mèche et la chambre de compression, ladite mèche présentant une extrémité qui barbote dans un récipient rempli d'un liquide lubrifiant, l'autre extrémité étant constituée par l'anneau autour du piston.

On peut noter que la lubrification étant effectuée entre des moyens d'étanchéité la mèche n'est pas soumise à un courant d'air extérieur, ce qui permet d'assurer une bonne lubrification. En effet, un courant d'air transformerait le film d'huile produit par la mèche en des gouttelettes qui n'assurent pas une lubrification convenable. A cet égard, il est préférable que le réservoir rempli de liquide lubrifiant soit fermé de façon hermétique, sans contact avec l'atmosphère.

Dans le mode de réalisation préféré, la mèche, notamment en feutre, est disposée dans une gorge du cylindre, le piston étant lisse.

Afin de régler le débit du liquide lubrifiant dans la mèche, il est prévu un élément, par exemple commandé par une vis pour rétrécir plus ou moins le diamètre de la mèche.

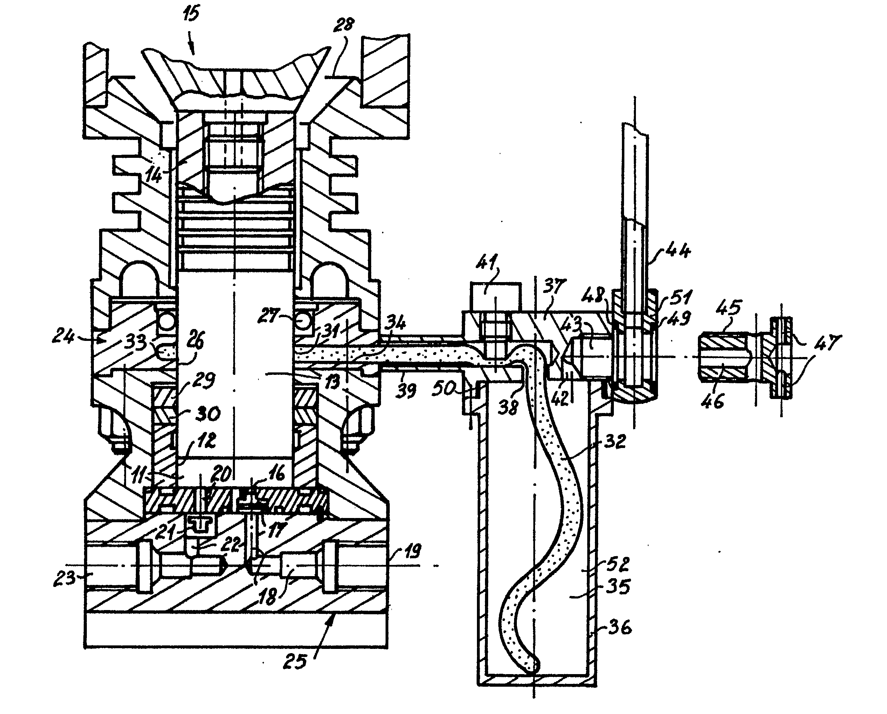

D'autres caractéristiques et avantages du dispositif de lubrification réalisés selon l'invention apparaîtront avec la description qui suit d'un exemple de réalisation donné ci-après en référence au dessin annexé dans lequel la figure unique est une vue en coupe d'une partie de compresseur qui montre le dispositif de lubrification de piston selon l'invention.

Sur la figure unique, on n'a représenté et on ne décrira que les éléments d'un compresseur dont la description est nécessaire à la compréhension de l'invention relative à un dispositif de lubrification de piston.

Ce compresseur comprend une chambre de compression 11 délimitée par un cylindre à section circulaire 12 dans lequel coulisse un piston lisse 13 animé d'un mouvement alternatif de va-et-vient par l'intermédiaire d'un embiellage 14 relié à un vilebrequin 15 actionné par un moteur non représenté. L'embiellage 14 et le vilebrequin 15 baignent dans de l'huile de lubrification contenue dans un carter 28. La chambre de compression 11 comporte un orifice d'entrée 16 du fluide gazeux à comprimer muni d'un clapet d'admission 17 et connecté, par des conduits 18, à une prise extérieure d'entrée 19 du fluide gazeux. Cette chambre comporte également un orifice de sortie 20 du fluide gazeux comprimé, muni d'un clapet de refoulement 21 et connecté, par des conduits 22 à une prise extérieure de sortie 23 du fluide gazeux comprimé.

Les différents éléments qui constituent le corps 24 et la tête 25 du cylindre 12 sont de construction classique et ne seront pas décrits de manière plus détaillée sauf en ce qui concerne les différents moyens d'étanchéité de la face interne 26 du cylindre 12.

Dans la partie du cylindre qui se trouve du côté de l'embiellage du piston 13, ce cylindre comporte un segment d'étanchéité 27 qui a pour but d'assurer l'étanchéité à l'huile de lubrification du vilebrequin et de l'embiellage entre le carter 28 et la chambre de compression 11, huile qui aurait tendance à rejoindre la chambre de compression à travers l'espace annulaire entre le piston 13 et la paroi interne 26 du cylindre 12. Dans la partie du cylindre se trouvant du côté de la tête 25, le cylindre comporte deux segments d'étanchéité identiques 29 et 30 qui ont pour but d'assurer l'étanchéité de l'espace annulaire entre le piston lisse 13 et la paroi interne 26 du cylindre 12 d'une part, au fluide gazeux à haute pression contenu dans la chambre de compression 11 et, d'autre part, à l'huile de lubrification du carter 28 qui aurait pu fuir à travers le segment d'étanchéité 27.

Avec de tels segments d'étanchéité 27,29 et 30, le piston lisse 13 et la paroi interne du cylindre correspondante ne sont pas lubrifiés ou du moins le sont insuffisamment. Aussi, selon la présente invention, il est proposé de disposer entre le segment d'étanchéité 27 et le segment d'étanchéité 29 des moyens de lubrification 31 de la tête du piston 13. Ces moyens 31 consistent en un matériau lubrificateur telle qu'une mèche de feutre 32 imbibée d'huile, disposé en anneau dans une gorge 33 pratiquée dans la paroi interne 26 du cylindre 12. Cette gorge 33 communique avec l'extérieur du cylindre par un conduit 34 prévu pour le passage de la mèche de feutre 32 vers un réservoir d'huile 35 dans lequel se termine la mèche de feutre 32.

Le réservoir 35, qui est isolé de l'atmosphère, comporte un récipient 36 muni d'un joint d'étanchéité 50 et d'un couvercle 37 dans lequel sont aménagés différents conduits et orifices, en particulier un orifice 38 pour le passage de la mèche 32 dans le récipient 36 et qui communique avec l'extérieur par un conduit ou canal 39 qui est situé dans le prolongement du conduit 34 du cylindre 32. Sur le canal 39 peut se visser une vis 41 dont l'extrémité interne s'applique sur la mèche 32 de manière à régler le débit de l'huile dans la mèche. Le remplissage du récipient 36 est obtenu par un orifice 42 en combinaison avec un conduit 43 et un conduit 44 d'arrivée d'huile, le conduit 44 communiquant avec l'orifice 42 par l'intermédiaire d'une pièce rapportée 51 et d'une vis 45 qui est vissée dans le conduit 43 et maintient la pièce 51 contre le couvercle 37. La vis 45 est percée d'un trou axial 46 et de plusieurs trous radiaux 47 qui communiquent avec le trou axial 46. Des joints toriques 48 et 49 assurent l'étanchéité de la pièce rapportée 51 et de la vis 45. Enfin, le couvercle 37 est fixé à la paroi extérieure du cylindre 12 par l'intermédiaire du conduit 39, ce dernier se prolongeant par le conduit 34 dans le corps du cylindre 24.

La lubrification du piston lisse 13 s'effectue de la façon suivante. L'extrémité de la mèche de feutre 32, qui est dans le récipient 36, s'imbibe d'huile de lubrification 52 et, par capillarité, cette huile se propage vers l'autre extrémité de la mèche qui, par l'intermédiaire de la gorge 33, entoure le piston lisse 13. De cette manière, le piston 12 et la paroi interne 26 du cylindre 12 reçoivent l'huile de lubrification suivant une quantité réglable par la vis 41, cette quantité étant juste suffisante pour assurer la lubrification sans excédent d'huile, excédent qui aurait tendance à fuir vers la chambre de compression 12 et ainsi polluer le fluide gazeux. Le récipient 36 est alimenté en huile de lubrification par le conduit 44 et la vis percée 45.

Grâce à ce dispositif de lubrification selon l'invention, il est possible de contrôler la lubrification du piston en fonction des conditions de fonctionnement du compresseur aussi bien par le choix de l'huile de lubrification 52 que par le débit de cette huile et il en résulte une grande souplesse d'utilisation.

Bien entendu, la mèche de feutre 32 s'use par suite du frottement sur le piston mais il est possible de la remplacer sans difficulté.

Avec ce dispositif de lubrification qui vient d'être décrit, il a été possible d'obtenir une durée de vie du piston de quelques centaines d'heures dans le cas de compresseurs réalisant des compressions de quelques centaines de bars, ce qui constitue une amélioration importante par rapport aux compresseurs de l'art antérieur. En outre, le fluide comprimé n'est pas pollué par des gouttelettes d'huile.

**Revendications**

1. Dispositif de lubrification de piston pour un compresseur de fluide gazeux comportant un cylindre (12), délimitant au moins une chambre de compression (11) et pourvu de moyens d'admission (16 à 19) et de moyens de refoulement (20 à 23) du fluide, au moins un piston mobile (13) dans le cylindre (12), et des moyens d'étanchéité (27, 29, 30) permettant d'assurer l'étanchéité de la chambre de compression (11), ce dispositif de lubrification étant caractérisé en ce que la lubrification du piston (13) est obtenue par une mèche (32) solidaire du corps de cylindre (24) et conformée en anneau autour du piston (13), cette mèche, qui est installée entre des premier (27) et second (29, 30) moyens d'étanchéité, le second moyen assurant l'étanchéité entre la mèche et la chambre de compression, ladite mèche présentant une extrémité qui barbote dans un récipient (36) rempli d'un liquide lubrifiant (52), l'autre extrémité étant constituée par l'anneau autour du piston (13).

2. Dispositif de lubrification selon la revendication 1, caractérisé en ce que le piston (13) est lisse et en ce que la mèche (32) est disposée dans une gorge (33) du corps de cylindre (24).

3. Dispositif de lubrification selon la revendication 1 ou 2, caractérisé en ce que le débit de liquide lubrifiant (52) dans la mèche (32) est réglé par des moyens (41) disposés entre les extrémités de la mèche qui permettent de faire varier la section de la mèche (32).

. 4. Dispositif de lubrification selon la revendication 3, caractérisé en ce que les moyens de réglage du débit du liquide lubrifiant (52) dans la mèche comprennent une vis de serrage (41).

5. Dispositif de lubrification selon l'une quelconque des revendications précédentes, caractérisé en ce que la mèche est en feutre.

6. Dispositif de lubrification selon l'une quelconque des revendications précédentes, caractérisé en ce que le récipient (36) rempli d'un liquide lubrifiant (52) est isolé de l'atmosphère.

7. Dispositif de lubrification selon la revendication 6, caractérisé en ce que :
- le récipient (36) rempli de liquide lubrifiant (52) comporte un couvercle (37) disposé de manière étanche sur les bords du récipient (36),
- le couvercle (37) a deux orifices, l'un (42) pour l'entrée du liquide lubrifiant, l'autre (38) pour le passage de la mèche (32),
- l'orifice de passage (38) de la mèche communique avec un conduit (39) prévu pour le passage de la mèche (32),
- la gorge (33) du corps de cylindre (24) communique avec l'extérieur par un conduit (34) disposé dans le corps du cylindre et recevant la mèche (32), ce conduit (34) communiquant avec le conduit (39) du couvercle du récipient (36) de liquide lubrifiant,
- l'orifice d'entrée (42) du liquide lubrifiant (52) communique avec un conduit d'arrivée (44) du liquide lubrifiant par un canal (43) recevant une vis (45) percée d'un trou axial (46) et de trous radiaux (47) communiquant avec le trou axial (46).

8. Dispositif de lubrification selon l'une quelconque des revendications précédentes et destiné a un compresseur comprenant un embiellage (14) lubrifié et mécaniquement lié au piston (13) pour l'entraîner dans un mouvement alternatif de va-et-vient, caractérisé en ce que les premiers moyens (27) d'étanchéité assurent l'étanchéité par rapport à l'embiellage.

**Patentansprüche**

1. Schmiervorrichtung für einen Kolben eines Kompressors für ein gasförmiges Fluid, dessen Zylinder (12) mindestens eine Kompressionskammer (11) umschliesst und mit Einlaßmitteln (16 bis 19) und Auslaßmitteln (20 bis 23) für das Fluid, mit einem im Zylinder (12) beweglichen Kolben (13) und Dichtmitteln (27, 29, 30) versehen ist, die die Dichtheit der Kompressionskammer (11) sicherstellen, dadurch gekennzeichnet, daß die Schmierung des Kolbens (13) durch einen Docht (32) erzielt wird, der Bestandteil des Zylinderkörpers (24) ist und ringförmig den Kolben (13) umgibt, wobei der Docht zwischen ersten (27) und zweiten Dichtmitteln (29, 30) eingefügt ist und die zweiten Dichtmittel die Dichtheit zwischen dem Docht und der Kompressionskammer bewirken, und wobei der Docht mit einem Ende in einen Behälter (36) eintaucht, der mit einem flüssigen Schmiermittel (52) gefüllt ist, während das andere Ende von dem den Kolben (13) umgebenden Ring gebildet wird.

2. Schmiervorrichtung nach Anspruch 1, dadurch gekennzeichnet, daß der Kolben (13) glatt ist und daß der Docht (32) in einer Nut (33) des Zylinderkörpers (34) angeordnet ist.

3. Schmiervorrichtung nach Anspruch 1 oder 2, dadurch gekennzeichnet, daß die Schmiermittelzufuhr (52) im Docht (32) durch Mittel (41) geregelt wird die sich zwischen den beiden Enden des Dochts befinden und den Querschnitt des Dochts (32) zu verändern erlauben.

4. Schmiervorrichtung nach Anspruch 3, dadurch gekennzeichnet, daß die Mittel zur Regelung der Schmiermittelzufuhr (52) im Docht eine Spannschraube (41) enthalten.

5. Schmiervorrichtung nach einem beliebigen der vorhergehenden Ansprüche, dadurch gekennzeichnet, daß der Docht aus einem Filz besteht.

6. Schmiervorrichtung nach einem beliebigen der vorhergehenden Ansprüche, dadurch gekennzeichnet, daß der mit flüssigem Schmiermittel (52) gefüllte Behälter (36) gegen die Atmosphäre isoliert ist.

7. Schmiervorrichtung nach Anspruch 6, dadurch gekennzeichnet, daß
- der mit flüssigem Schmiermittel (52) gefüllte Behälter (36) einen Deckel (37) aufweist, der dicht auf den Rändern des Behälters (36) aufliegt,
- der Deckel (37) zwei Öffnungen hat, nämlich eine (42) für den Einlaß von flüssigem Schmiermittel und eine zweite (38) für den Durchlaß des Dochtes (32),
- der Durchlaß (38) für den Docht mit einer Leitung (39) in Verbindung steht, durch die der Docht (32) verläuft,
- die Nut (33) des Zylinderkörpers (24) über eine Leitung (34) im Zylinderkörper in Verbindung steht, die nach außen führt, den Docht (32) aufnimmt und mit der Leitung (39) im Deckel des Behälters (36) für flüssiges Schmiermittel in Verbindung steht,
- die Einlaßöffnung (42) für flüssiges Schmiermittel (52) mit einer Leitung (44) zur Zufuhr von flüssigem Schmiermittel über einen Kanal (43) in Verbindung steht, der eine Schraube (45) aufnimmt, wobei diese Schraube ein axiales Loch (46) und radiale Löcher (47) aufweist, die mit dem axialen Loch (46) in Verbindung stehen.

8. Schmiervorrichtung nach einem beliebigen der vorhergehenden Ansprüche für einen Kompressor, der eine geschmierte und mechanisch mit dem Kolben (13) verbundene Kurbelanordnung (14) zum Antrieb des Kolbens in Hin- und Herbewegung aufweist, dadurch gekennzeichnet, daß die ersten Dichtmittel (27) die Dichtheit bezüglich der Kurbelanordnung herstellen.

**Claims**

1. A piston lubrication device for a compressor operating on a gaseous fluid and comprising a cylinder (12) delimiting at least one compression chamber (11) and provided with fluid inlet means (16 to 19) and fluid outlet means (20 to 23), at least one movable piston (13) in the cylinder (12) and sealing means (27, 29, 30) allowing to seal the compression chamber (11), characterized in that the lubrication of the piston (13) is obtained by a wick (32) which is integral with the body of the cylinder (24) and surrounds the piston (13) in the form of a ring, this wick being installed between first (27) and second sealing means (29, 30), the second means isolating the wick against the compression chamber, said wick having one end dipped into a container (36) which is filled with a lubrifying liquid (52), whereas the other end is constituted by the ring around the piston (13).

3. A lubrication device according to claim 1, characterized in that the piston (13) is smooth and that the wick (32) is disposed in a groove (33) provided in the body of the cylinder (24).

3. A lubrication device according to claim 1 or 2, characterized in that the supply rate of liquid lubricant (52) through the wick (32) is adjusted by means (41) disposed between the ends of the wick and allowing to vary the cross-section of the wick (32).

4. A lubrication device according to claim 3, characterized in that the means for adjusting the supply rate of liquid lubricant (52) through the wick comprise a squeezing screw (41).

5. A lubrication device according to any one of the preceding claims, characterized in that the wick is made of a felt.

6. A lubrication device according to any one of the preceding claims, characterized in that the container (36), which is filled with liquid lubricant (52), is isolated against the atmosphere.

7. A lubrication device according to claim 6, characterized in that

– the container (36) which is filled with liquid lubricant (52) comprises a cover (37) which is disposed in a tight manner on the edges of the container (36),

– the cover (37) is provided with two openings, one (42) for the liquid lubricant inlet and the other (38) for the passage of the wick (32),

– the opening (38) for the passage of the wick communicates with a duct (39) provided for the passage of the wick (32),

– the groove (33) provided in the body of the cylinder (24) communicates with the outside via a duct (34) disposed in the cylinder body and receiving the wick (32), this duct (34) communicating with the duct (39) in the cover of the liquid lubricant container (36),

– the opening (42) serving as inlet for the liquid lubricant (52) communicates with an access duct (44) for liquid lubricant via a channel (43) receiving a screw (45), which is provided with an axial hole (46) and radial holes (47) communicating with the axial hole (46).

8. A lubrication device according to any one of the preceding claims and intended for use in a compressor comprising a crank device (14) which is lubricated and mechanically connected to the piston (13) in order to drive the latter in a to-and-fro alternating movement, characterized in that the first sealing means (27) ensure the sealing against the crank device.